# EUROPEAN PATENT APPLICATION

(11) **EP 3 171 272 A1**
(43) Date of publication of application: **24.05.2017**
(21) Application number: 16198330.9
(22) Date of filing: 11.11.2016
(51) Int. Cl.: G06F 9/50

(54) **IDENTIFICATION OF CROSS-INTERFERENCE BETWEEN WORKLOADS IN COMPUTE-NODE CLUSTERS**

(30) Priority: 22.11.2015 US 201562258473 P
(71) Applicant: Strato Scale Ltd., 4673314 Herzliya (IL)
(72) Inventor: Hudzia, Benoit Guillaume Charles, Belfast, Northern Ireland BT2 8HB (GB); Solganik, Alexander, Kfar-Saba (IL)
(74) Representative: Beck Greener

(57) **Abstract**

A method includes monitoring performance of a plurality of workloads that run on multiple compute nodes. Respective time series of anomalous performance events are established for at least some of the workloads. A selected workload is placed on a selected compute node, so as to reduce cross-interference between two or more of the workloads, by comparing two or more of the time series.

## Description

### FIELD OF THE INVENTION

The present invention relates generally to compute-node clusters, and particularly to methods and systems for placement of workloads.

### BACKGROUND OF THE INVENTION

Machine virtualization is commonly used in various computing environments, such as in data centers and cloud computing. Various virtualization solutions are known in the art. For example, VMware, Inc. (Palo Alto, California), offers virtualization software for environments such as data centers, cloud computing, personal desktop and mobile computing.

### SUMMARY OF THE INVENTION

An embodiment of the present invention that is described herein provides a method including monitoring performance of a plurality of workloads that run on multiple compute nodes. Respective time series of anomalous performance events are established for at least some of the workloads. A selected workload is placed on a selected compute node, so as to reduce cross-interference between two or more of the workloads, by comparing two or more of the time series.

In some embodiments, comparing the time series includes identifying cross-interference between first and second workloads, by detecting that respective first and second time series of the first and second workloads exhibit simultaneous occurrences of the anomalous performance events. In an embodiment, placing the selected workload includes, in response to identifying the cross-interference, migrating one of the first and second workloads to a different compute node. In another embodiment, the method further includes identifying that some of the anomalous performance events are unrelated to cross-interference, and omitting the identified anomalous performance events from comparison of the time series.

In some embodiments, comparing the time series includes assessing characteristic cross-interference between first and second types of workloads, by comparing multiple pairs of time series, wherein each pair includes a time series of the first type and a time series of the second type. In an example embodiment, placing the selected workload includes formulating a placement rule for the first and second types of workloads. In a disclosed embodiment, comparing the pairs of time series is performed over a plurality of workloads of the first type, a plurality of workloads of the second type, and a plurality of the compute nodes. In an embodiment, comparing the time series includes representing the time series by respective signatures, and comparing the signatures.

There is additionally provided, in accordance with an embodiment of the present invention, a system including an interface and one or more processors. The interface is configured for communicating with multiple compute nodes. The processors are configured to monitor performance of a plurality of workloads that run on the multiple compute nodes, to establish, for at least some of the workloads, respective time series of anomalous performance events, and to place a selected workload on a selected compute node, so as to reduce cross-interference between two or more of the workloads, by comparing two or more of the time series.

There is further provided, in accordance with an embodiment of the present invention, a computer software product, the product including a tangible non-transitory computer-readable medium in which program instructions are stored, which instructions, when read by one or more processors, cause the one or more processors to monitor performance of a plurality of workloads that run on multiple compute nodes, to establish, for at least some of the workloads, respective time series of anomalous performance events, and to place a selected workload on a selected compute node, so as to reduce cross-interference between two or more of the workloads, by comparing two or more of the time series.

The present invention will be more fully understood from the following detailed description of the embodiments thereof, taken together with the drawings in which:

### BRIEF DESCRIPTION OF THE DRAWINGS

Fig. 1 is a block diagram that schematically illustrates a computing system, in accordance with an embodiment of the present invention;
Fig. 2 is a block diagram that schematically illustrates elements of the computing system of Fig. 1, in accordance with an embodiment of the present invention;
Fig. 3 is a graph illustrating examples of anomalous VM performance over time, in accordance with an embodiment of the present invention; and
Fig. 4 is a flow chart that schematically illustrates a method for VM placement based on comparison of anomalous performance over time, in accordance with an embodiment of the present invention.

### DETAILED DESCRIPTION OF EMBODIMENTS

### OVERVIEW

Embodiments of the present invention provide improved techniques for placement of workloads in a system that comprises multiple interconnected compute nodes. Each workload consumes physical resources of the compute node on which it runs, e.g., memory, storage, CPU and/or network resource. The workloads running in the system are typically of various types, and each type of workload is characterized by a different profile of resource consumption.

Workloads running on the same node may cause cross-interference to one another, e.g., when competing for a resource at the same time. Workload placement decisions have a considerable impact on the extent of cross-interference in the system, and therefore on the overall system performance. The extent of cross-interference, however, is extremely difficult to estimate or predict. For example, in a compute node that runs a large number of workloads, it is extremely challenging to identify which workloads are the cause of cross-interference, and which workloads are affected by it.

Techniques that are described herein identify types of workloads that are likely to cause cross-interference to one another. This identification is based on detection and correlation of anomalous performance events occurring in the various workloads. The underlying assumption is that workloads that experience anomalous performance events at approximately the same times are also likely to inflict cross-interference on one another. Such workloads should typically be separated and not placed on the same compute node.

In some embodiments, the system monitors the performance of the various workloads over time, and identifies anomalous performance events. An anomalous performance event typically involves a short period of time during which the workload deviates from its baseline or expected performance. For at least some of the workloads, the system establishes respective time series of the anomalous performance events.

By comparing time series of different workloads, the system identifies workloads (typically pairs of workloads) that are likely to cause cross-interference to one another. Typically, workloads in which anomalous performance events occur at approximately the same times are suspected as having cross-interference, and *vice versa.* In some embodiments the system assesses the possible cross-interference by examining the time series over a long period of time and over multiple compute nodes. Typically, the cross-interference relationships are determined between *types* of workloads, and not between individual workload instances. The cross-interference assessment is then used for placing workloads in a manner that reduces the cross-interference between them.

It should be noted that the disclosed techniques identify and compare anomalous performance events occurring in individual workloads, as opposed to anomalous resource consumption in a compute node as a whole. As such, the disclosed techniques do not merely detect potential placement problems or bottlenecks, but also provide actionable information for resolving them.

The methods and systems described herein are highly effective in identifying and reducing cross-interference between workloads. As a result, resources such as memory, storage, networking and computing power are utilized efficiently. The disclosed techniques are useful in a wide variety of environments, e.g., in multi-tenant data centers in which cross-interference causes tenants to be billed for computing resources they did not use.

Although the embodiments described herein refer mainly to placement of Virtual Machines (VMs), the disclosed techniques can be used in a similar manner for placement of other kinds of workloads, such as operating-system containers and processes. The disclosed techniques are useful both for initial placement of workloads, and for workload migration. Moreover, although the embodiments described herein refer mainly to detection of cross-interference between VMs in a given compute node, the disclosed techniques can be used in a similar manner for detection of cross-interference between containers in a given VM, or between compute-nodes in a given compute-node cluster, for example.

### SYSTEM DESCRIPTION

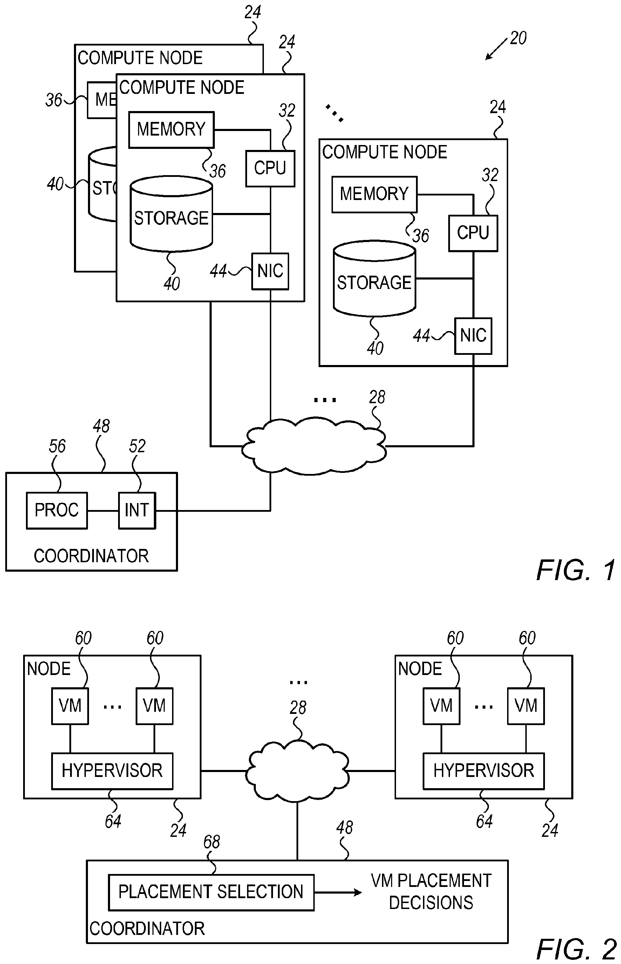

Fig. 1 is a block diagram that schematically illustrates a computing system 20, which comprises a cluster of multiple compute nodes 24, in accordance with an embodiment of the present invention. System 20 may comprise, for example, a data center, a cloud computing system, a High-Performance Computing (HPC) system or any other suitable system.

Compute nodes 24 (referred to simply as "nodes" for brevity) typically comprise servers, but may alternatively comprise any other suitable type of compute nodes. System 20 may comprise any suitable number of nodes, either of the same type or of different types. Nodes 24 are also referred to as physical machines.

Nodes 24 are connected by a communication network 28, typically a Local Area Network (LAN). Network 28 may operate in accordance with any suitable network protocol, such as Ethernet or Infiniband. In the embodiments described herein, network 28 comprises an Internet Protocol (IP) network.

Each node 24 comprises a Central Processing Unit (CPU) 32. Depending on the type of compute node, CPU 32 may comprise multiple processing cores and/or multiple Integrated Circuits (ICs). Regardless of the specific node configuration, the processing circuitry of the node as a whole is regarded herein as the node CPU. Each node 24 further comprises a memory 36 (typically a volatile memory such as Dynamic Random Access Memory - DRAM) and a Network Interface Card (NIC) 44 for communicating with network 28. In some embodiments a node may comprise two or more NICs that are bonded together, e.g., in order to enable higher bandwidth. This configuration is also regarded herein as an implementation of NIC 44. Some of nodes 24 (but not necessarily all nodes) may comprise one or more non-volatile storage devices 40 (e.g., magnetic Hard Disk Drives - HDDs - or Solid State Drives - SSDs).

In some embodiments system 20 further comprises a coordinator node 48. Coordinator node 48 comprises a network interface 52, e.g., a NIC, for communicating with nodes 24 over network 28, and a processor 56 that is configured to carry out the methods described herein.

Fig. 2 is a block diagram that schematically illustrates the internal structure of some of the elements of system 20 of Fig. 1, in accordance with an embodiment of the present invention. In the present example, each node 24 runs one or more Virtual Machines (VMs) 60. A hypervisor 64, typically implemented as a software layer running on CPU 32 of node 24, allocates physical resources of node 24 to the various VMs. Physical resources may comprise, for example, computation resources of CPU 32, memory resources of memory 36, storage resources of storage devices 40, and/or communication resources of NIC 44.

In an embodiment, coordinator node 48 comprises a placement selection module 68. In the system configuration of Fig. 1, module 68 runs on processor 56. Module 68 decides how to assign VMs 60 to the various nodes 24. The decisions referred to herein as "placement decisions." One kind of placement decision specifies on which node 24 to initially place a new VM 60 that did not run previously. Another kind of placement decision, also referred to as a migration decision, specifies whether and how to migrate a VM 60, which already runs on a certain node 24, to another node 24. A migration decision typically involves selection of a source node, a VM running on the source node, and/or a destination node. Once a placement decision (initial placement or migration) has been made, coordinator node 48 carries out the placement process.

The system, compute-node and coordinator-node configurations shown in Figs. 1 and 2 are example configurations that are chosen purely for the sake of conceptual clarity. In alternative embodiments, any other suitable configurations can be used. For example, although the embodiments described herein refer mainly to virtualized data centers, the disclosed techniques can be used for communication between workloads in any other suitable type of computing system.

The functions of coordinator node 48 may be carried out exclusively by processor 56, i.e., by a node separate from compute nodes 24. Alternatively, the functions of coordinator node 48 may be carried out by one or more of CPUs 32 of nodes 24, or jointly by processor 56 and one or more CPUs 32. For the sake of clarity and simplicity, the description that follows refers generally to "a coordinator." The functions of the coordinator may be carried out by any suitable processor or processors in system 20. In one example embodiment, the disclosed techniques are implemented in a fully decentralized, peer-to-peer (P2P) manner. In such a configuration, each node 24 maintains its local information (e.g., monitored VM performance) and decides which nodes ("peers") to interact with based on the surrounding peer information.

The various elements of system 20, and in particular the elements of nodes 24 and coordinator node 48, may be implemented using hardware/firmware, such as in one or more Application-Specific Integrated Circuit (ASICs) or Field-Programmable Gate Array (FPGAs). Alternatively, some system, compute-node or coordinator-node elements, e.g., elements of CPUs 32 or processor 56, may be implemented in software or using a combination of hardware/firmware and software elements.

Typically, CPUs 32, memories 36, storage devices 40, NICs 44, processor 56 and interface 52 are physical, hardware implemented components, and are therefore also referred to as physical CPUs, physical memories, physical storage devices physical disks, and physical NICs, respectively.

In some embodiments, CPUs 32 and/or processor 56 comprise general-purpose processors, which are programmed in software to carry out the functions described herein. The software may be downloaded to the processors in electronic form, over a network, for example, or it may, alternatively or additionally, be provided and/or stored on non-transitory tangible media, such as magnetic, optical, or electronic memory.

### VM PLACEMENT BASED ON COMPARISON OF ANOMALOUS PERFORMANCE OVER TIME

In each compute node 24 of system 20, hypervisor 64 allocates physical resources (e.g., memory, storage, CPU and/or networking bandwidth) to VMs 60 running on that node. In many practical implementations, the hypervisor does not impose limits on these allocations, meaning that any VM is allocated the resources it requests as long as they are available. As a result, intensive resource utilization by some VMs may cause starvation or resources to other VMs. Such effect is an example of cross-interference, i.e., performance degradation in one VM due to operation of another VM on the same node. Cross-interference may also have cost impact. For example, in a multi-tenant data center, cross-interference from a different tenant may cause billing for resources that were not actually used.

In various embodiments, VMs 60 are of various types. Example of different types of VMs are SQL Database VM, NoSQL database server VM, Hadoop VM, Machine Learning VM, Web Server VM, Storage server VM, and Network server VM (e.g., router or DNS server), to name just a few. Typically, different types of VMs have different resource requirements and different performance characteristics. For example, database VMs tend to be Input/Output (I/O) intensive and thus incur considerable networking resources, while machine learning VMs tend to be memory and CPU intensive. The VM setup also influences its resource consumption. For example, a VM that runs a database using remote storage can also be influenced by the amount of networking resources available.

Different types of VMs are also characterized by different extents of cross-interference they cause and/or suffer from. For example, running multiple VMs that all consume large amounts of storage space on the same node may cause considerable cross-interference. On the other hand, running a balanced mix of VMs, some being storage-intensive, others being CPU-intensive, and yet others being memory-intensive, will typically yield high overall performance. Thus, placement decisions have a significant impact on the overall extent of cross-interference, and thus on the overall performance of system 20.

In some embodiments, coordinator 48 assigns VMs 60 to nodes 24 in a manner that aims to reduce cross-interference between the VMs. The placement decisions of coordinator 48 are based on comparisons of time-series of anomalous performance events occurring in the various VMs. The embodiments described below refer to a specific partitioning of tasks between hypervisors 64 (running on CPUs 32 of nodes 24) and placement selection module 68 (running on processor 56 of coordinator 48). This embodiment, however, is depicted purely by way of example. In alternative embodiments, the disclosed techniques can be carried out by any processor or combination of processors in system 20 (e.g., any of CPUs 32 and/or processor 56) and using any suitable partitioning of tasks among processors.

In some embodiments, hypervisors 64 monitor the performance of VMs 60 they serve, and identify anomalous performance events occurring in the VMs. It is emphasized that each anomalous performance event occurs in a specific VM, not in the hypervisor as a whole or in the compute node as a whole.

An anomalous performance event in a VM typically involves a short period of time during which the VM deviates from its baseline or expected performance. In some anomalous performance events, the VM consumes an abnormal (exceedingly high or exceedingly low) level of some physical resource, e.g., memory, storage, CPU power or networking bandwidth. In some anomalous performance events, some VM performance measure, e.g., latency, deviates from its baseline or expected value.

More generally, an anomalous performance event in a VM can be defined as a deviation of a performance metric of the VM from its baseline or expected value. The performance metric may comprise any suitable combination of one or more resource consumption levels of the VM, and/or one or more performance measures of the VM. In some embodiments, hypervisors 64 or coordinator 48 reduce the dimensionality of the resource consumption levels and/or performance measures used for identifying anomalous performance events. Dimensionality reduction can be carried out using any suitable scheme, such as, for example, using Principal Component Analysis (PCA). Example PCA techniques are described by Candes et al., in "Robust Principal Component Analysis?" Journal of the ACM, volume 58, issue 3, May, 2011, which is incorporated herein by reference. The disclosed techniques, however, are in no way limited to PCA, and may be implemented using any other suitable method.

In various embodiments, hypervisors 64 may detect anomalous performance events by comparing a performance measure to a threshold, by computing and analyzing a suitable statistical parameter of a performance measure, by performing time-series analysis, for example. In various embodiments, the process of detecting anomalous performance events may be supervised or unsupervised.

Supervised anomaly detection schemes typically require a set of training data that has been labeled as normal (i.e., non-anomalous), so that the anomaly detection process can compare this data to incoming data in order to determine anomalies. Unsupervised anomaly detection schemes do not require a labeled training set, and are typically much more flexible and easy to use, since they do not require human intervention and training. Examples of supervised anomaly detection schemes include rule-based methods, as well as model-based approaches such as replicator neural networks, Bayesian or unsupervised support vector machines.

Some anomaly detection methods may be designed to detect "point" anomalies (i.e., an individual data instance that is anomalous relative to the rest of the data points). As the data becomes more complex and less predictable, it is important that anomalies are based on the data context, whether that context is spatial, temporal, or semantic. In such cases, statistical methods may be preferred.

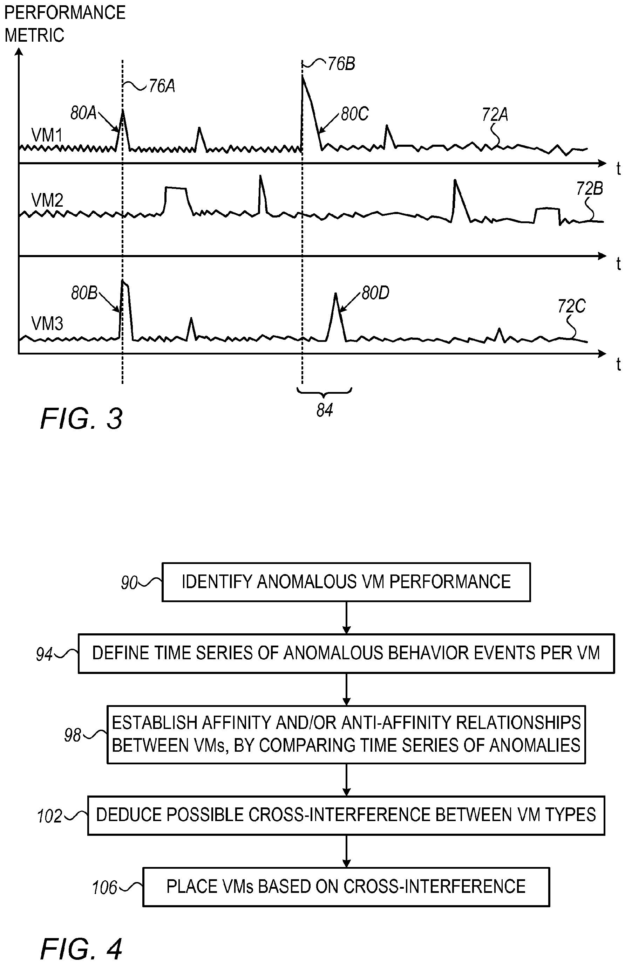

Fig. 3 is a graph illustrating monitored performance of three VMs over time, and showing examples of anomalous VM performance, in accordance with an embodiment of the present invention. Three plots denoted 72A-72C illustrate some performance metric of three VMs denoted VM1-VM3, respectively, as a function of time.

In this example, the performance metric of each VM has a certain baseline value during most of the time, with occasional peaks that are regarded as anomalous performance events. An underlying assumption is that VMs in which anomalous performance events occur approximately at the same times are suspected of inflicting cross-interference to one another.

Consider, for example, the performance metrics of VM1 and VM3 in Fig. 3. At a time 76A, anomalous performance events 80A and 80B occur simultaneously in both VMs. This simultaneous occurrence may be indicative of cross-interference between VM1 and VM3. At a time 76B, an anomalous performance event 80C occurs in VM1, and shortly thereafter an anomalous performance event 80D occurs in VM3. The two events (80C and 80D) are not simultaneous, but nevertheless occur within a small time vicinity 84. Such nearly-simultaneous occurrence, too, may be indicative of cross-interference between VM1 and VM3. At other times, various anomalous performance events occur in the three VMs, but these events do not appear to be synchronized.

In the present example, the anomalous performance events in VM1 and VM3 appear to be somewhat synchronous, the anomalous performance events in VM1 and VM2 do not appear to be synchronous, and the anomalous performance events in VM2 and VM3 also do not appear to be synchronous. In other words, VM1 and VM3 appear to have mutual anti-affinity, whereas VM1 and VM2, and also VM2 and VM3, appear to have mutual affinity. Based on these relationships, VM1 and VM3 may be suspected of causing cross-interference to one another, and it may be beneficial to place them on different nodes. VM1 and VM2, and also VM2 and VM3, do not appear to cause cross-interference to one another, and may be good candidates for placement on the same node.

It should be noted that a single simultaneous occurrence of anomalous performance events is usually not a strong indicator of cross-interference. In order to establish a high confidence level that a pair of VMs indeed cause cross-interference to one another, it is typically necessary to accumulate multiple simultaneous occurrences of anomalous performance events over a long time period. The length of such a time usually depends on the typical number of anomalous performance events generated over a certain period. For example, if anomalous performance events occur on the order of once per day, the relevant time period may be on the order of weeks. If, on the other hand, anomalous performance events occur on the order of microseconds, the accumulation over a minute of data may be sufficient. Generally speaking, the relevant time duration is relative to the amount of information generated and its frequency.

In the present context, the term "VMs that cause cross-interference to one another" refers to *types* of VMs, and not to individual VM instances. For example, it may be established that two VMs running database servers cause considerable cross-interference to one another, but a VM running a Web server and a VM running a database server do not. As a result, coordinator 48 may aim to separate database-server VMs and not place them on the same node.

Since cross-interference relationships are established between *types* of VMs, coordinator 48 may accumulate simultaneous occurrences of anomalous performance events over many pairs of VMs, possibly across many compute nodes. For example, coordinator 48 may check for simultaneous occurrences of anomalous performance events over all pairs of {database-server VM, Web-server VM} placed on the same node, across all compute nodes 24. This process enables coordinator 48 to cross-reference and verify that the detected anomaly is indeed related to the pair of VM types being considered, and not attributed to some other hidden reason.

Fig. 4 is a flow chart that schematically illustrates a method for VM placement based on comparison of anomalous performance over time, in accordance with an embodiment of the present invention. The method begins with hypervisors 64 (running on CPUs 32 of nodes 24) monitoring the performance metrics of VMs 60 they host, and identifying anomalous performance events, at a monitoring step 90.

Each hypervisor defines, per VM, a respective time series of the anomalous performance events occurring in that VM, at a time series definition step 94. Each time series typically comprises a list of occurrence times of the anomalous performance events, possibly together with additional information characterizing the events and/or the VM. The hypervisors send the various time series to processor 56 of coordinator 48.

At an affinity/anti-affinity establishment step 98, processor 56 of coordinator 48 compares the time series of various pairs of VMs. By comparing the time series, processor 56 establishes which pairs of VMs appear to have high anti-affinity (i.e., exhibit consistent simultaneous occurrences of anomalous performance events), and which pairs of VMs appear to have high affinity (i.e., do not exhibit consistent simultaneous occurrences of anomalous performance events).

As noted above, when comparing the time series of two VMs, processor 56 allows for some time offset between anomalous performance events (e.g., time vicinity 84 between events 80C and 80D in the example of Fig. 3). Events having such an offset may also be considered simultaneous, possibly with a lower confidence score. This offset tolerance is helpful, for example, in accounting for propagation delays and timing offsets in the system.

At a cross-interference deduction step 102, processor 56 uses the comparison results to deduce which pairs of VMs (or rather which pairs of types of VMs) exhibit significant cross-interference. As noted above, processor 56 may compare time series of pairs of VM types over a long time period, over multiple pairs of VMs belonging to these types, and/or across multiple nodes 24.

In some embodiments, processor 56 may quantify the extent of affinity or anti-affinity between two VM types using some numerical score, and/or assign a numerical confidence level to the affinity or anti-affinity estimate. The numerical scores and/or confidence levels may depend, for example, on the number and/or intensity of simultaneous anomalous performance events.

At a placement step 106, processor 56 makes placement decisions based on the cross-interference estimates of step 102. Various placement decisions can be taken. For example, processor 56 may formulate placement rules that define which types of VMs are to be separated to different nodes, and which types of VMs can safely be placed on the same node. In one embodiment, processor 56 may identify the VM that is most severely affected by cross-interference on a certain node 24, and migrate this VM to a different node. As another example, processor 56 may avoid migrating a VM to a certain node, if this node is known to run VMs having high anti-affinity relative to the VM in question.

In some embodiments, using the pairing process described above, processor 56 forms clusters of VMs and thus identify "hot spots" of resource consumption. The pairing process can also be used for identifying higher-level interference (beyond the level of pairs of VMs), e.g., rack networking interference.

In some embodiments, processor 56 identifies and discards anomalous performance events that are not indicative of cross-interference between VMs. For example, a certain type of VM (e.g., a Web server of a certain application) may exhibit peak of some resource consumption at certain times, regardless of other VMs and regardless of the identity of the node in which it operates. Such events should be identified and discarded from the cross-interference assessment process. In some embodiments, processor 56 identifies such events by comparing time series of VMs of a certain type on multiple different nodes 24. If a characteristic anomalous performance event is found on multiple VMs of a certain type on multiple different nodes, processor 56 may conclude that this sort of event is not related to cross-interference, and thus discard it.

The above process (comparing time series of VMs of a certain type on multiple different nodes) typically involves a very large number of time-series comparisons. In order to reduce comparison time and computational complexity, processor 56 may represent each time series of anomalous performance event by a respective compact signature, and perform the comparisons between signatures instead of between the actual time series. In an embodiment, signature comparison is used as an initial pruning step that rapidly discards time series that are considerably dissimilar. The remaining time series are then compared using the actual time series, not signatures. Example signatures may comprise means, standard deviations, differences and/or periodicities of the time series. Processor 56 may define a suitable similarity metric over these signatures, and search over a large number of signatures for similar time series.

In some embodiments, upon finding two time series having a considerable level of simultaneously-occurring anomalous performance events, processor 56 initially considers the corresponding VM types as having cross-interference. Only if these anomalous performance events are later proven to be unrelated to cross-interference using the above process, processor 56 regards the VM types as having affinity. In some embodiments, processor 56 uses additional extrinsic information to identify similar VMs (whose anomalous performance events are thus unrelated to cross-interference). Such extrinsic information may comprise, for example, whether the VMs are owned by the same party, whether the VMs have similar VM images, whether the VMs have similar deployment setup (e.g., remote or local storage, number and types of network interfaces), whether the VMs have similar structure of CPU, core, memory or other elements, and/or whether the VMs have a similar composition of workloads.

Although the embodiments described herein mainly address workload placement, the methods and systems described herein can also be used in other applications, such as, for example, for micro service setup (e.g., for investigating service interaction) or for hardware setup (e.g., for identifying best or worst hardware combinations and detect anomalous behavior).

It will thus be appreciated that the embodiments described above are cited by way of example, and that the present invention is not limited to what has been particularly shown and described hereinabove. Rather, the scope of the present invention includes both combinations and sub-combinations of the various features described hereinabove, as well as variations and modifications thereof which would occur to persons skilled in the art upon reading the foregoing description and which are not disclosed in the prior art. Documents incorporated by reference in the present patent application are to be considered an integral part of the application except that to the extent any terms are defined in these incorporated documents in a manner that conflicts with the definitions made explicitly or implicitly in the present specification, only the definitions in the present specification should be considered.

Embodiments of the present invention have been described with particular reference to the examples illustrated. However, it will be appreciated that variations and modifications may be made to the examples described within the scope of the present invention.

## Claims

1. A method, comprising:
monitoring performance of a plurality of workloads (60) that run on multiple compute nodes (24);
establishing, for at least some of the workloads, respective time series of anomalous performance events (80A-80D); and
placing a selected workload on a selected compute node, so as to reduce cross-interference between two or more of the workloads, by comparing two or more of the time series.

2. The method according to claim 1, wherein comparing the time series comprises identifying cross-interference between first and second workloads, by detecting that respective first and second time series of the first and second workloads exhibit simultaneous occurrences of the anomalous performance events.

3. The method according to claim 2, wherein placing the selected workload comprises, in response to identifying the cross-interference, migrating one of the first and second workloads to a different compute node.

4. The method according to claim 2, and comprising identifying that some of the anomalous performance events are unrelated to cross-interference, and omitting the identified anomalous performance events from comparison of the time series.

5. The method according to claim 1 or 2, wherein comparing the time series comprises assessing characteristic cross-interference between first and second types of workloads, by comparing multiple pairs of time series, wherein each pair comprises a time series of the first type and a time series of the second type.

6. The method according to claim 5, wherein placing the selected workload comprises formulating a placement rule for the first and second types of workloads.

7. The method according to claim 5, wherein comparing the pairs of time series is performed over a plurality of workloads of the first type, a plurality of workloads of the second type, and a plurality of the compute nodes.

8. The method according to claim 1 or 2, wherein comparing the time series comprises representing the time series by respective signatures, and comparing the signatures.

9. A system (20), comprising:
an interface (44, 52), for communicating with multiple compute nodes (24); and
one or more processors (32, 56), configured to monitor performance of a plurality of workloads (60) that run on the multiple compute nodes, to establish, for at least some of the workloads, respective time series of anomalous performance events (80A-80D), and to place a selected workload on a selected compute node, so as to reduce cross-interference between two or more of the workloads, by comparing two or more of the time series.

10. The system according to claim 9, wherein the one or more processors are configured to identify cross-interference between first and second workloads, by detecting that respective first and second time series of the first and second workloads exhibit simultaneous occurrences of the anomalous performance events.

11. The system according to claim 10, wherein the one or more processors are configured to migrate one of the first and second workloads to a different compute node in response to identifying the cross-interference.

12. The system according to claim 10, wherein the one or more processors are configured to identify that some of the anomalous performance events are unrelated to cross-interference, and to omit the identified anomalous performance events from comparison of the time series.

13. The system according to claim 9 or 10, wherein the one or more processors are configured to assess characteristic cross-interference between first and second types of workloads, by comparing multiple pairs of time series, wherein each pair comprises a time series of the first type and a time series of the second type.

14. The system according to claim 9 or 10, wherein the one or more processors are configured to represent the time series by respective signatures, and to compare the signatures.

15. A computer software product, the product comprising a tangible non-transitory computer-readable medium in which program instructions are stored, which instructions, when read by one or more processors (32, 56), cause the one or more processors to monitor performance of a plurality of workloads (60) that run on multiple compute nodes (24), to establish, for at least some of the workloads, respective time series of anomalous performance events (80A-80D), and to place a selected workload on a selected compute node, so as to reduce cross-interference between two or more of the workloads, by comparing two or more of the time series.
